# EUROPEAN PATENT SPECIFICATION

(11) **EP 1 175 792 B1**
(45) Date of publication and mention of the grant of the patent: **31.12.2008**
(21) Application number: 01908274.2
(22) Date of filing: 02.03.2001
(51) Int. Cl.: H04M 1/60, H04B 1/38

(54) **MOBILE COMMUNICATION TERMINAL AND CAR MOUNTED ELECTRONIC DEVICE**
MOBILES KOMMUNIKATIONSENDGERÄT UND IN EINEM FAHRZEUG MONTIERTES ELEKTRONIKGERÄT
TERMINAL DE COMMUNICATION MOBILE ET DISPOSITIF ELECTRONIQUE INSTALLE DANS UNE VOITURE

(30) Priority: 02.03.2000 JP 2000057244
(43) Date of publication of application: 30.01.2002
(73) Proprietor: KABUSHIKI KAISHA TOSHIBA, Tokyo 105-8001 (JP)
(72) Inventor: YAMAMOTO, Toshifumi, Shiroyamamachi, Tsukui-gun, Kanagawa 220 (JP)
(74) Representative: Henkel, Feiler & Hänzel
(86) International application number: PCT/JP2001/001648
(87) International publication number: WO 2001/065867

(56) References cited:
- EP-A- 1 049 347
- WO-A-97/13332
- WO-A-98/57824
- WO-A-99/66647
- GB-A- 2 264 613

## Description

### Technical Field

The present invention pertains to a mobile communication terminal such as mobile telephone set or cordless telephone set, for example. In particular, the present invention relates to a car mounted electronic device such as a mobile communication terminal connectable to a car audio device or car navigation, car telephone set and the like and a car mounted electronic device that makes this mobile communication terminal connectable.

### Background Art

In recent years, a mobile communication terminal such as mobile telephone set or cordless telephone set is rapidly more popular. Although a terminal of such type is mainly used at an exterior or at an interior lobby, it may be used in car such as private car or commercially available car. In this case, it is very dangerous for a driver to make a phone call while holding a terminal during driving from a viewpoint of traffic safety.

Conventionally, a specific car kit having a microphone and a speaker is installed on a dashboard or the like. Then, a terminal is mounted on a placement base of this car kit, whereby the terminal can be used as a car telephone device. When this car kit is employed, a driver can make a phone call by its hands-free talk function without holding a terminal.

However, in order to achieve this hands-free talk, a user must purchase the car kit, and is forced to burden a cost for that purpose. In addition, even if the user purchases the car kit, in the case where there is no adequate space for installing the car kit in car, installation itself may be difficult.

EP 1 049 347 A discloses a method and a device for establishing a connection between a communication system, particularly a mobile phone, and a corresponding kit, particularly a corresponding car-kit. According to this document a radio link between the mobile phone and the kit is provided, and the connection is established by a communication between the mobile phone and the kit over said radio link. This document has been published on November 2, 2000 and forms part of the state of the art only under Art. 54(3) EPC.

Additionally WO 97/13332 A relates to a device that enables cordless or mobile telephones to be used in a hands free manner in vehicles or any other situation. The device comprises a transmitter device tunable to desired channel frequencies of an existing sound reproduction system such as a vehicle radio. The transmitter device is mounted in the mobile phone itself or associated with a structure to hold the mobile phone whereby sounds received by said mobile phone associated with an incoming call are transferred to said transmitter device to be transmitted there from to the sound reproduction system to be reproduced thereby.

### Disclosure of Invention

It is an object of the present invention to provide a mobile communication terminal and a car mounted electronic device that enable hands-free communication without requiring a specific car kit, thereby enabling mobile communication in car at a low cost without providing a new installation space.

According to the present invention the above object is achieved by a mobile communication terminal according to claim 1 and a method according to claim 9. The dependent claims are directed to different advantageous aspects of the invention.

Further, the present invention comprises a withdrawal detecting function for detecting the fact that the mobile communication terminal has been withdrawn from the radio area for the car mounted electronic device; and a radio automatic disconnection control function, wherein, in the case where the withdrawal detecting function detects the fact that the mobile communication terminal has withdrawn from the radio area, a communication link is disconnected by the second radio channel between the car mounted electronic device and the mobile communication terminal.

By doing this, in the case where the user gets out of the car with mobile communication terminal, a communication link caused by the second radio channel, which has been established between the mobile communication terminal and the car mounted electronic device, is automatically disconnected so that the mobile communication terminal can be automatically restored to a sole operating mode. In addition, the car mounted electronic device can be automatically restored to an operating mode that precedes its own specific operation.

### Brief description of Drawings

FIG. 1 is a schematic view illustrating a first embodiment of a car mounted radio system using a mobile telephone set and a car audio device according to the present invention;
FIG. 2 is a block diagram depicting a configuration of a mobile telephone set of the system shown in FIG. 1;
FIG. 3 is a circuit block diagram depicting a configuration of a car audio device used in the system shown in FIG. 1;
FIG. 4 is a sequence diagram showing procedures for establishing a BT radio link executed between the mobile telephone set and the car audio device
FIG. 5 is a sequence view showing procedures executed between the mobile telephone set and the car audio device on incoming call;
FIG. 6 is a sequence diagram showing procedures executed between the mobile telephone set and the car audio device on outgoing call;
FIG. 7 is a sequence diagram showing procedures executed between the mobile telephone set and the car navigation device on incoming call; and
FIG. 8 is a sequence diagram showing procedures executed between the mobile telephone set and the car navigation device on outgoing call.

### Best Mode for Carrying Out of the Invention

### (First embodiment)

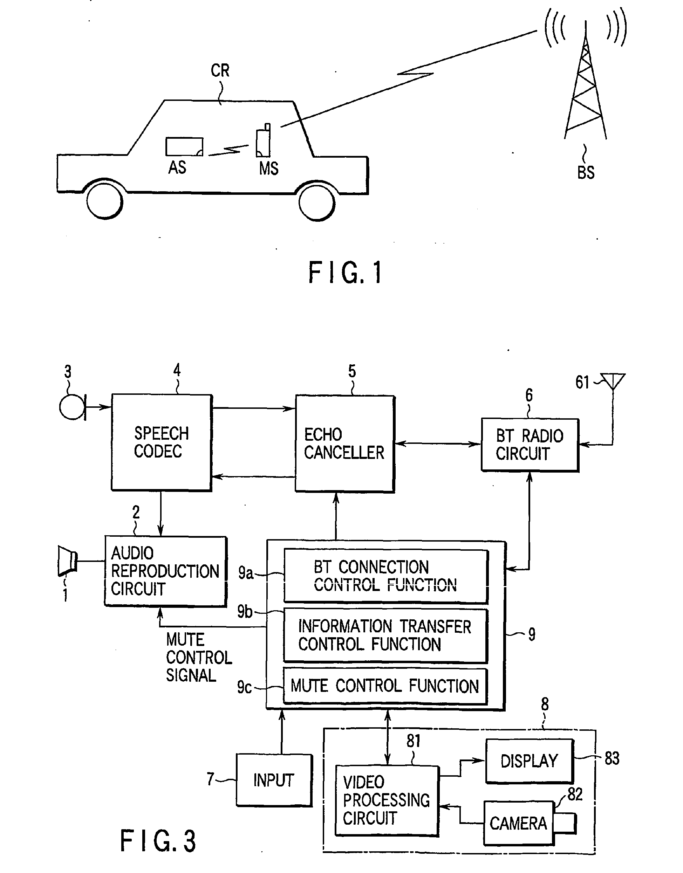

FIG. 1 is a schematic view illustrating a first embodiment of a car mounted radio system using a mobile communication terminal and a car mounted electronic device according to the present invention. In the figure, MS denotes a mobile telephone set that is a mobile communication terminal, and AS denotes a car audio device that is a car mounted electronic device.

First, the mobile telephone set MS comprises: a first radio communication function using a W-CDMA (Wideband-Code Division Multiple Access) scheme; and a second radio communication function using a BT (Bluetooth) scheme.

The W-CDMA scheme enables large-capacity multimedia mobile communication at a high speed by using a 5-MHz bandwidth, for example, in a 2 GHz band. This scheme makes radio communication after synchronization caused by code spreading has been established with one of a plurality of base stations (BS) distributed in a service area. A CDMA scheme is used as a radio access scheme between the base station BS and the mobile telephone set MS. In addition, three schemes, i.e., DS-FDD (Direct Sequence-Frequency Division Duplex), MS-FDD (Multi Carrier-Frequency Division Duplex), and TDD (Time Division Duplex) are selectively used for upstream and downstream directions.

In contrast, the BT scheme makes radio communication within a short distance of 10 m or less with a finely weak electronic wave of 10 mW (a maximum of 100 mW) by utilizing a 2.4 GHx bandwidth ISM band. This scheme is used as a scheme for making radio connection between a personal computer and a peripheral device such as printer or between a mobile telephone set MS and a notebook type personal computer PC. In the BT scheme, a radio transmission system employing a frequency hopping system is used so as to enable operation even in environment containing much noise. A hop frequency of the frequency hopping is set to 1600 hops/second, for example. In addition, radio communication with a communication party by means of an asynchronous channel is enabled, and the entire transfer rate is 1 Mbps.

Further, 8 devices can be connected at most within a use range of 10 m or less. These devices form a network called Piconet. One of them functions as a master, and the others function as a slave. In the device in the Piconet, connection authentication is performed through a password called PIN (Personal Identification Number) code.

Next, a car audio device AS has a function for outputting music broadcast received by a tuner or music reproduced from a semiconductor memory such as CD, MD, flash EEPROM and the like. In addition to this specific function, this device comprises a radio communication function and a function for enabling a hands-free talk using the BT (Bluetooth) scheme.

The BT radio communication function defines a limited peripheral region in or outside a car as a radio area, and establishes a radio link with a mobile telephone set MS that has entered this radio area by means of the BT radio communication protocol, thereby making radio communication.

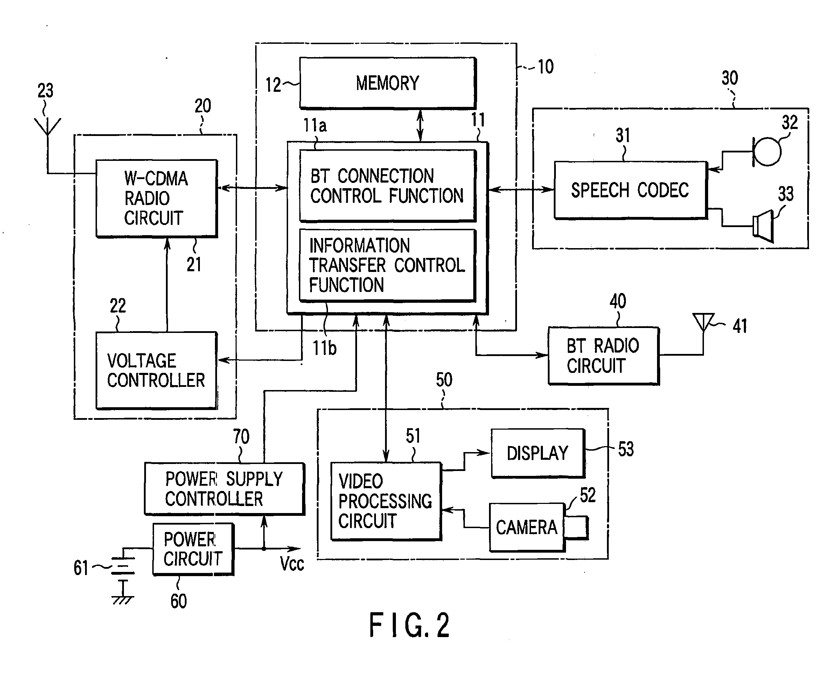

In the meantime, the mobile telephone set MS and car audio device AS are respectively configured as follows, for example. FIG. 2 is a block diagram depicting a configuration of the mobile telephone set MS. FIG. 3 is a block diagram depicting a configuration of a car audio device AS.

First, the mobile telephone set MS comprises a control unit 10; a W-CDMA radio unit 20; and a communication unit 30. The MS further comprises a BT radio section 40; a video processing unit 50; a power circuit 60; and a power supply control section 70.

The W-CDMA radio unit 20 comprises a W-CDMA radio section 21 and a voltage control section 22. The W-CDMA radio section 21 receives/transmits a CDMA signal from/to a base station BS via an antenna 23 in accordance with a W-CDMA scheme. The code spreading chip rate is set to 4.096 Mcps, and a QPSK scheme is used for a primary modulation system. The voltage control section 22 controls a transmission level of a CDMA signal transmitted by the W-CDMA radio section 21 in accordance with a command from a main control circuit 11.

The communication unit 30 comprises a speech CODEC section 31; a microphone 32; and a speaker 33. The speech CODEC section 31 encodes a transmission speech signal inputted from the microphone 32 in accordance with a predetermined voice encoding scheme. In addition, a reception signal inputted from the W-CDMA radio section 21 via the main control circuit 11 is decoded and converted into a reception speech signal. Then, the converted signal is loudly outputted from a receiver 33.

The BT radio section 40 receives/transmits a radio signal from/to the car audio device AS in accordance with the BT scheme. Reference numeral 41 denotes an antenna used for receiving/transmitting a radio signal in accordance with this BT scheme.

The video processing unit 50 comprises: an video processing section 51; a camera 52 employing a charged coupler device such as CCD or CMOS; and a display section 53 using a liquid crystal device (LCD). The video processing section 51 is used for television telephone communication or, video data communication and the like. This section applies encode processing such as encoding to an video signal acquired by the camera 52, and the encoding video data is inputted to the control unit 10. In addition, reception video data or video data stored in a memory 12 is subjected to decode processing, and the decoded data is displayed on the display section 53.

A power circuit 60 generates an operating voltage Vcc required for operating each circuit in the mobile telephone set MS based on an output voltage of a battery 61.

A power supply control section 70 has a battery saving function. This section supplies the operating voltage Vcc to each circuit in the mobile telephone set MS at each optimal timing.

The control unit 10 comprises: a main control circuit 11 using a microcomputer: and a memory 12. At this memory 12, there are provided: a program storage region; a control data storage region; and reception/transmission data storage region. A program required for control operation of the main control circuit 11 is stored in advance in the program storage region. Control data required for execution of the above program, communication paert's telephone directory data and the like are stored in the control data storage region. Data to be transmitted by the W-CDMA scheme and BT scheme or received data is stored in the reception/transmission data storage region.

The main control circuit 11 comprises: a control function for making radio communication with a mobile communication network employing the W-CDMA scheme and new functions according to the present invention, i.e., a BT connection control function 11a and an information transfer control function 11b.

In the case where a mobile telephone set MS itself enters a BT radio area formed by a car audio device AS, the BT connection control function 11a executes procedures for establishing a BT radio link with the car audio device AS. Then, after the BT radio link has been established, this function sets an operating mode of the mobile telephone set MS to a hands-free mode. Furthermore, in the case where the mobile telephone set MS is out of the radio area for the car audio device AS, it executes procedures for disconnecting the BT radio link. Then, after the radio link has been disconnected, the operating mode of the mobile telephone set MS is reset to a single mode to set the hands-free communication operating mode.

The information transfer control function 11b controls transfer of an incoming/outgoing call control signal between the mobile communication network and the car audio device AS and transfer of speech data and video data, respectively, while a BT radio link with the car audio device AS is established by the BT connection control function 11a.

The car audio device AS comprises: a speaker 1; an audio reproduction section 2; a hands-free communication section; an video processing unit 8; a BT radio section 6; a control section 9; and an input section 7.

The audio reproduction section 2 reproduces a music broadcast received by a tuber (not shown) or audio data recorded in a CD, a MD or a flash memory, and loudly outputs it from the speaker 1.

The hands-free communication section consists of a microphone 3, a speech CODEC 4; and an echo canceller 5. Reception speech data supplied from the BT radio section 6 described later is inputted to the speech CODEC section 4 via the echo canceller 5. The speech CODEC section 4 performs a predetermined speech decode processing for the reception speech data, and reproduces a reception speech signal. This reception speech signal is supplied to the speaker 1 via the audio reproduction section 2, and is loudly outputted from this speaker 1.

The hands-free communication section encodes a transmission speech signal inputted to the microphone 3 at the speech CODEC section 4 in accordance with a predetermined speech encoding scheme, and inputs the encoded transmission speech data to the echo canceller 5. The echo canceller 5 generates a pseudo echo adaptively based on the reception speech data. Then, this pseudo echo is subtracted from the transmission speech data, thereby canceling an acoustic echo component included in the transmission speech data.

The BT radio section 6 receives reception speech data transferred from the mobile telephone set MS in a radio manner in accordance with the BT scheme at the hands-free mode, and inputs the data to the echo canceller 5. In addition, the transmission speech data outputted from the echo canceller 5 is transmitted to the mobile telephone set MS in a radio manner. Reference numeral 61 denotes an antenna for receiving/transmitting a radio signal in accordance with this BT scheme.

The video processing unit 8 is intended for television telephone communication, video data communication and the like. This unit comprises a video processing section 81, a camera 82 employing a charged coupler device such as CCD or CMOS; and a display section 83 using a liquid crystal device (LCD).

The video processing section 81 encodes a video signal acquired by the camera 82, and supplies the signal to the control unit 9. In addition, the reception video data outputted from the control unit 9 is subjected to decode processing, and the decoded data is displayed at the display section 83.

The control unit 9 integrally controls operation of the entire car audio device AS. This unit further comprises: a BT connection control function 9a; an information transfer control function 9b; and a mute control function 9c as well as a control function according to the above audio reproduction.

The BT connection control function 9a supervises an entry of the mobile telephone set MS into its own BT radio area by means of the BT radio section 6. In the case where it is detected that the mobile telephone set MS enters its own BT radio area, this function executes procedures for establishing a BT radio link with the mobile telephone set MS. In addition, after the BT radio link has been established, it sets an operating mode of the car audio device AS to a hands-free mode.

On the other hand, in the case where it is detected that the mobile telephone set MS is out of its own radio area, the above control function executes procedures for disconnecting a BT radio link. After the radio link has been disconnected, its own operating mode is reset to a single mode for performing only audio reproduction.

The information transfer control function 9b receives/transmits a variety of control data according to incoming and outgoing calls between the BT radio link and the mobile telephone set MS via the BT radio link while the BT radio link with the mobile telephone set MS is established by the BT connection control function 9a. In addition, in the case where a hands-free communication operation is started, reception/transmission speech data and video data are received/transmitted from/to the mobile telephone set MS.

The mute control function 9c determines whether or not audio reproduction operation is performed at the audio reproduction section 2 prior to start of hands-free communication. If audio reproduction is in progress, this function supplies a mute control signal to the audio reproduction section 2 to suspend audio reproduction or reduce the output volume to a predetermined level or less.

Now, an operation of the above configured mobile telephone set MS and car audio device AS will be described here.

The mobile telephone set MS sets its own operating mode to a single communication mode if the mobile telephone is outside a car. Therefore, in this situation, if a user performs call origination operation or an incoming call comes from a mobile communication network, the mobile telephone set MS establishes a radio link with the base station BS of the mobile communication network in accordance with the W-CDMA scheme, and makes communication for talking or television telephone.

In addition, the car audio device AS periodically transmits an IQ packet for inquiry from a BT radio section 40 in a wait state. This IQ packet transmission is intended for detecting an entry of the mobile telephone set MS into a BT radio area formed by the car audio device AS.

In this situation, assume that a user of the mobile telephone set MS gets on its own car CR. Then, an IQ packet transmitted by the car audio device AS is received by the mobile telephone set MS. When this IQ packet is received, the mobile telephone set MS transmits an FHS packet to the car audio device AS. Into this FHS packet, there is inserted data representing an attribute of the mobile telephone set MS, for example, information representing a Bluetooth address and a Bluetooth clock.

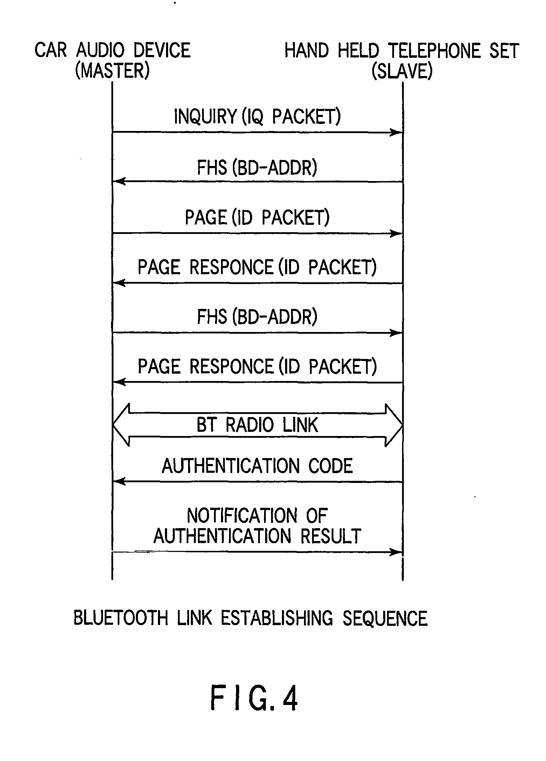

When the above FHS packet is received, the car audio device AS determines that the mobile telephone set MS enters its own BT radio area. Then, this device executes connection procedures for establishing asynchronous connection-less link (ACL) with the mobile telephone set MS. FIG. 4 shows the connection procedures.

That is, the car audio device AS first transmits an ID packet for page to the mobile telephone set MS based on information on the FHS packet received from the mobile telephone set MS. When the car audio device receives an ID packet for page response from the mobile telephone set MS to transmission of this ID packet, then it transmits an FHS packet.

The FHS message includes a synchronous word, an ID address, and a MAC address. The synchronous word is generated based on an address of the car audio device AS that is a master. The ID address is a unique address "BD-ADDR" in this Piconet, assigned to the BT radio section 6 of the car audio device AS. This address is composed of an "LAP field" (least significant address), an "UAP address" (significant address), and an NAP address (additional address). The MAC address is a physical address of the mobile telephone set MS.

When the above FHS packet is received, the mobile telephone set MS returns an ID packet for page response, thereby establishing connection. In this way, an ACL link is established between the mobile telephone set MS and the car audio device AS.

When the ACL link is established, the mobile telephone set MS transmits a pre-registered authentication code to the car audio device AS. When the above authentication code is received, the car audio device AS determines whether or not this authentication code is a pre-registered code. When it is determined that such authentication code is a pre-registered code, the car audio device AS notifies the authentication result to the mobile telephone set MS. In this way, the mobile telephone set MS enables radio communication with the car audio device AS.

In addition, at this time, the mobile telephone set MS switches its own communication mode from a single mode to a hands-free mode for making communication using the car audio device AS. Alternatively, the car audio device AS switches its own operating mode from an audio reproduction mode to a hands-free mode.

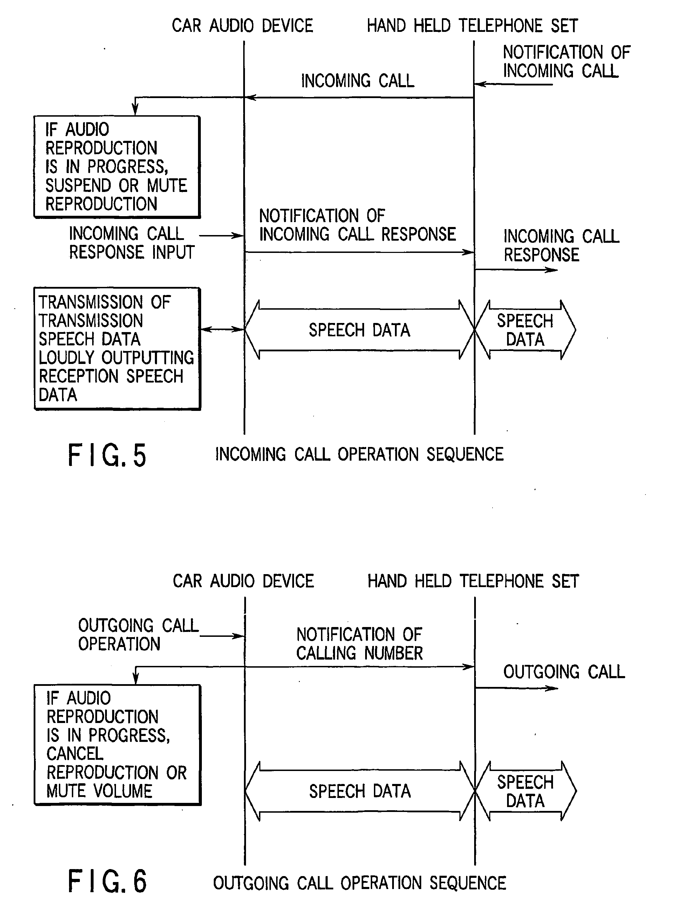

In a state in which this hands-free mode is set, assume that an incoming call comes from a mobile communication network. In this case, the mobile telephone set MS transmits incoming call notification information to the car audio device AS via an ACL link, as shown in FIG. 5. When incoming call notification information comes from the mobile telephone set MS, the car audio device AS determines whether or not audio reproduction is in progress. As a result of this determination, if audio reproduction is in progress, a control unit 9 supplies a mute control signal to an audio reproduction section 2, thereby suspending audio reproduction operation or muting or reducing a volume.

In response to the above incoming call notification, assume that a user press an incoming call response switch of the car audio device AS or inputs a voice message that an incoming call response is made by utilizing a speech recognition function of the car audio device AS. In this case, notification information on an incoming call response is returned from the car audio device AS to the mobile telephone set MS via the BT radio link. When the notification information on an incoming call response reaches, the mobile telephone set MS returns an incoming call response from the W-CDMA radio section 21 to the mobile communication network. In this way, a connection between the mobile communication network and the mobile telephone set MS is established by a radio link using the W-CDMA scheme, further enabling communication with a party terminal connected to the mobile communication network.

In this communication state, the reception speech data transmitted from the party terminal via the W-CDMA radio link is transferred to the BT radio section 40 via the main control circuit 11 after the data has been received by the W-CDMA radio section 21 via the mobile telephone set MS, and is transferred from this BT radio section 40 to the car audio device AS via the BT radio link. In the car audio device AS, when the above reception speech data is received by the BT radio section 6, this reception speech data is inputted to the speech CODEC section 4 via the echo canceller 5, is decoded by this speech CODEC section 4, and then, reproduced by the audio reproduction section 2 to be loudly outputted from the speaker 1.

In contrast, the user's transmission speech is inputted to the microphone 3 of the car audio device AS, and is encoded by the speech CODEC section 4.

Then, an acoustic echo component is cancelled by the echo canceller 5, and then, transferred from the BT radio section 6 to the mobile telephone set MS via the BT radio link. This transmission speech data is inputted to the W-CDMA radio section 21 via the main control circuit 10 after the data has been received by the BT radio section 40 of the mobile telephone set MS, and is transmitted from this W-CDMA radio section 21 to the base station BS of the mobile communication network.

On the other hand, in a wait state, assume that the user operates an off-hook key and a dial key of the car audio device AS. In this case, the control unit 9 of the car audio device AS determines whether or not audio reproduction is in progress, as shown in FIG. 6. When audio reproduction is in progress, the control unit 9 supplies a mute control signal to the audio reproduction section 2, thereby suspending audio reproduction operation or muting or reducing a volume.

In the case where an attempt is made to originate a call by utilizing the voice recognition function of the car audio device AS, a mute key provided at the car audio device AS is operated or a call origination ready key is operated. By doing this, the control unit 9 determines whether or not audio reproduction is in progress. As a result of this determination, if audio reproduction is in progress, the control unit 9 supplies a mute control signal to the audio reproduction section 2, thereby suspending audio reproduction operation or muting or reducing a volume. Then, in this state, the user voice inputs a dial number of a party terminal, and further, voice inputs outgoing call.

As described above, in the car audio device AS, when outgoing call operation is made, the inputted dial number is encoded. Then, the notification information on this encoded dial number is transferred from the BT radio section 6 to the mobile telephone set MS via the BT radio link. When the notification information on a dial number comes from the car audio device AS via the BT radio link, the mobile telephone set MS transmits outgoing call data from the W-CDMA radio section 21 to the mobile communication network. In contrast, when a terminal at the called party side responds to such incoming call, a connection between the mobile communication network and the mobile telephone set MS is established by a radio link using the W-CDMA scheme, enabling communication with the party terminal.

In the case where a dial number is voice inputted, a voice signal of the inputted dial number is transferred intact to the mobile telephone set MS via the BT radio link without encoding the signal, and speech recognized by the mobile telephone set MS so as to be converted into code data on the dial number.

Transfer operation of speech data between the mobile telephone set MS and the car audio device AS in a communication enable state is similar to the case of incoming call described previously.

On the other hand, assume that the user get off from a car CR while holding the mobile telephone set MS, and is out of the BT radio area formed by the car audio device AS. In this case, the car audio device As and the mobile telephone set MS detect withdrawal of this mobile telephone set MS from the BT radio area, and perform processing for disconnecting the BT radio link.

That is, in a state in which the BT radio link is established or in a state in which the current mode is switched to a low power consumption mode, the car audio device AS and the mobile telephone set MS periodically receives and transmits a packet. For example, every time a packet is received, a link supervision timer is reset, and a time for reception of a next packet to be sent from the party side is monitored. Even if the link supervision timer exceeds the limit, when no packet can be received, the car audio device AS or the mobile telephone set MS assumes the party side as a communication disable, transmits a control packet for disconnecting a BT radio link, and terminates the BT radio link.

Therefore, if the mobile telephone set MS is distant from its own vehicle for a predetermined time or more, the BT radio link is automatically disconnected.

In addition, at this time, the mobile telephone set MS restores its own communication operating mode from a hands-free mode for making communication using the car audio device AS to a single mode. Alternatively, the car audio device AS restores its own operating mode from a hands-free mode to an audio reproduction mode.

As has been described above, in the first embodiment, the BT radio sections 40 and 6 are provided respectively at the mobile telephone set MS and the car audio device AS. When the use of the mobile telephone set MS gets on the car CR, the BT radio ink is established between the mobile telephone set MS and the car audio device AS, and the hands-free mode is set at the mobile telephone set MS and the car audio device AS. Then, the speech data received/transmitted from/to the mobile communication network via the W-CDMA radio link is transferred between the mobile telephone set MS and the car audio device AS, enabling hands-free communication.

Therefore, the user can make hands-free communication by utilizing the existing car audio device AS, thereby enabling hands-free communication in the car inexpensively without newly providing a specific car kit. In addition, there is no need to connect its own mobile telephone set MS to the car audio device AS via a cable or attach it to a terminal. Thus, the user can make hands-free communication while the mobile telephone set MS is housed in a pocket of the user's cloth or in a bag.

In addition, at the time of outgoing call or incoming call, in the car audio device AS, it is determined whether or not audio reproduction is in progress. In the case where audio reproduction is in progress, an audio reproduction output is automatically muted. Therefore, there is no concern that hands-free communication is interfered with such audio reproduction output.

Further, the car audio device executes procedures for detecting an entry of the mobile telephone set MS into the BT radio area of the car audio device AS, and, with this being a trigger, establishing a BT radio link between the mobile telephone set MS and the car audio device AS. This makes it possible to automatically establish the BT radio link. Therefore, the user of the mobile telephone set MS may not perform operation or setting for forming the BT radio link.

Furthermore, in the case where it is detected that the mobile telephone set MS is withdrawn from the BT radio area, and this withdrawal is detected, the BT radio link between the car audio device AS and the mobile telephone set MS is disconnected, and operation modes for the car audio device AS and the mobile telephone set MS are restored to a single operating mode.

Therefore, processing for disconnecting the BT radio link and restoring a communication mode can be automatically performed. Thus, even in the case where the user gets out of the car CR while holding the mobile telephone set MS, it is unnecessary to perform operation for restoring the communication operating mode of its own mobile telephone set MS and car audio device AS to a single mode.

As a technique for detecting the withdrawal of the mobile telephone set MS from the BT radio area of the car audio device AS, there can be used a technique for the mobile telephone set MS to periodically transmit an access signal to the BT radio link, and then, supervising the presence or absence of a response from the car audio device AS to such access signal.

### (Second Embodiment)

According to a second embodiment of the present invention, a mobile telephone set MS is connected to a car navigation device comprising a microphone and a speaker via a BT radio interface, thereby enabling television telephone communication during a hands-free mode.

The car navigation device comprises: a function for measuring a current position of its own vehicle by utilizing a GPS (Global Positioning System); a function for displaying the thus measured current position at a display section together with map information; a hands-free communication function; a display control function for displaying a video for television telephone communication at the display section; and a BT interface for making radio communication with the mobile telephone set MS.

Among them, the display control function determines the current position and map information measured by the GPS system, namely, whether or not GPS information display operation is performed prior to the startup of the hands-free communication. If the information is being displayed, GPS information display operation is suspended or its display region is reduced. In this state, reception video data transferred by radio from the mobile telephone set MS via the BT interface is displayed at the display section.

The hands-free communication function is achieved by a speaker 1, an audio reproduction section 2, a microphone 3, a speech CODEC section 4, and an echo canceller 5, as in the first embodiment. The BT interface is composed of a BT radio section 6 and a BT connection control function 9a.

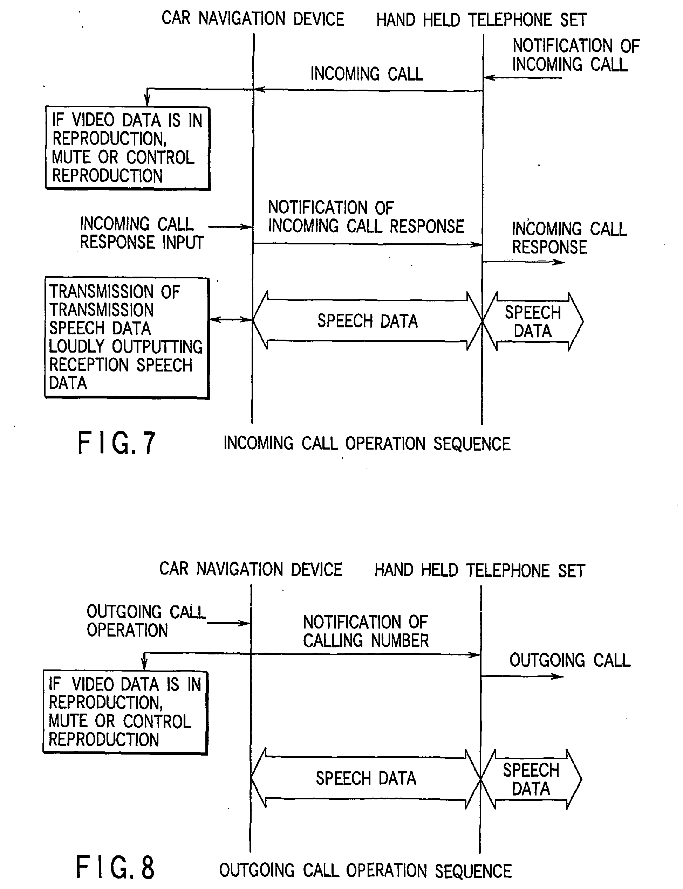

With such configuration, assume that an incoming signal comes from a mobile communication network while a hands-free mode is set. In this case, the mobile telephone set MS transfers control data for notifying the above incoming call to a car navigation device via the BT radio link, as shown in FIG. 7. When control data for notifying an incoming call comes from the mobile telephone set MS, the car navigation device determines whether or not GPS information is being displayed. If the car navigation device determines that the GPS information indispensable to car navigation (e.g., road map), the displaying of the GPS information is interrupted and the data transmitted from the mobile telephone is displayed instead. Alternatively, the region displaying the GPS information is reduced and the data sent from the mobile telephone is displayed in the remaining area of the screen. Thus, the data from the mobile telephone is displayed prior to the GPS information in the car navigation device.

In response to notification of the above incoming call, assume that the user presses an incoming call response switch provided at the car navigation device or inputs a voice message indicating that an incoming call response is made by utilizing the voice recognition function of the car navigation device. In this case, control data for notifying an incoming call response from the car navigation device to the mobile telephone set via a BT radio link is transmitted. When the mobile telephone set MS receives the control data for notifying the incoming call response, the W-CDMA radio section transmits an incoming call response signal to the mobile communication network. In this way, a connection between the mobile communication network and the mobile telephone set MS is established by a radio link using the W-CDMA scheme. Then, the mobile telephone set MS enables television telephone communication with the party terminal connected to the mobile communication network.

In this communication state, the reception speech data transmitted from the party terminal via the W-CDMA radio link is transferred to the BT radio section via the main control circuit after the data has been received by the W-CDMA radio section, and is transferred from this BT radio section to the car navigation device via the BT radio link.

When the above reception speech data is received by the BT radio section, the car navigation device inputs the reception speech data to the speech CODEC section via the echo canceller, and decodes the data at this speech CODEC section. Then, the decoded reception speech data is reproduced at the audio reproduction section, and is loudly outputted from the speaker.

In contrast, the user's transmission voice is inputted to the microphone of the car navigation device, and is encoded by the speech CODEC section. Then, an acoustic echo component is cancelled by the echo canceller. Then, the echo cancelled speech signal is transmitted from the BT radio section to the mobile telephone set MS via the BT radio link. Then, the transmission speech data is inputted to the W-CDMA radio section via the main control circuit after the data has been received by the BT radio section of the mobile telephone set MS, and is transmitted from this W-CDMA radio section to a base station BS of a mobile communication network.

On the other hand, in a wait state, assume that the user operates a call origination key and a dial key provided at the car navigation device. In this case, a control unit of the car navigation device determines whether or not GPS information is being displayed, as shown in FIG. 8. If the GPS information is being displayed, display operation of the GPS information is suspended or a display region is reduced.

In the case where a call is originated by utilizing a voice authentication function of the car navigation device, a mute key provided at the car navigation device is operated or a call origination ready key is operated. By doing this, the control unit determines whether or not GPS information is being displayed. As a result of this determination, if GPS information is being displayed, display operation of the GPS information is suspended or a display region is reduced. In this state, the user voice inputs a dial number of a party terminal, and further, voice inputs outgoing call.

As described above, when outgoing call operation is made in the car navigation device, control data for notifying an outgoing call number is transmitted from the BT radio section to the mobile telephone set MS via the BT radio link. When the mobile telephone set MS receives control data for notifying such outgoing call from the car navigation device via the BT radio link, the W-CDMA radio section transmits outgoing call data to the mobile communication network. In contrast, when an incoming call response operation is made in the mobile telephone set at the called party side, a connection between the mobile communication network and the mobile telephone set MS is established by a radio link using the W-CDMA scheme. Then, the mobile telephone set MS enables television telephone communication with a party terminal.

In this communication state, transfer operation of speech data between the mobile telephone set MS and the car navigation device is similar to a case during incoming call described previously.

As described above, in the second embodiment, in the case where video data for television telephone communication is displayed by utilizing a display section of the car navigation device, it is determined whether or not GPS information is being displayed. If GPS information is being displayed, display operation of the GPS information is suspended or the display region is reduced. In this state, video data for television telephone communication is displayed.

Therefore, video data for television telephone communication can be displayed without causing any problem while using a display section of the car navigation device.

In the case where a GPS information display region is reduced, a full screen display region of the display section is divided into two sections so that GPS information may be reduced to be displayed in one of these divided display regions. By doing this, video data for television telephone communication can be displayed in the other display region.

In addition, instead of reducing the GPS information display region, video data for television telephone communication may be displayed to be superimposed on part of the GPS information. This can be accomplished by using a picture-in-picture system or by using a video memory to composite GPS information and video data with each other.

### (Other Embodiments)

The present invention is not limited to each of these embodiments. For example, in the first embodiment, a description has been given by exemplifying a case of making hands-free communication. However, in the case where a camera 82 and a display section 83 are provided at the car audio device AS, television telephone communication of the hands-free system may be made by employing these camera 82 and display section 83.

In this case as well, for example, if data representing an operation state of the car audio device AS is already displayed at the display section 83 of the car audio device AS, the display of the display data may be suspended by a mute control or may be reduced in a manner similar to that in the second embodiment.

In addition, in the first embodiment, there has been described a case in which an echo canceller 5 required for hands-free communication is provided at the car audio device AS. However, in the case where the mobile telephone set MS itself comprises a hands-free communication function, an acoustic echo generated between the speaker 1 and the microphone 2 of the car audio device AS may be cancelled by employing the echo canceller provided at this mobile telephone set MS.

This makes it unnecessary to provide an echo canceller 5 for hands-free communication at the car audio device AS.

Further, it is possible to use, for another application, the result of authentication procedures executed when a BT radio link is established between the mobile telephone set MS and the car audio device AS. For example, as a result of the above authentication, in the case where the mobile telephone set MS requiring connection is not registered in advance, hands-free mode setting is rejected, and a command is assigned to an engine control circuit of the car CR, thereby restricting engine startup.

By doing this, the car CR can be safeguarded by utilizing a BT authentication function between the mobile telephone set MS and the car audio device AS.

In addition, in the first embodiment, there has been described a case in which the car audio device AS itself comprises the BT radio interface function and the hands-free communication function. The present invention is not limited to the case. An adapter device having the BT radio interface function and the hands-free communication function is provided, and this adapter device is connected to the car audio device AS so that the present invention may be achieved.

This makes it possible to utilize the existing car audio device AS intact.

The adapter device may be composed of its required minimum hardware for achieving the BT radio interface function and hands-free communication function, for example, and a memory card storing a program for controlling this hardware.

Further, in the first and second embodiments, there has been described a case in which a car mounted electronic device such as car audio device AS or car navigation device is defined as a master device of Bluetooth, and the mobile telephone set MS is defined as a slave device so as to establish and disconnect the BT radio link. However, the present invention is not limited to this case. The mobile telephone set MS is defined as a master device of Bluetooth, and the car mounted electronic device is defined as a slave device so as to establish and disconnect the BT radio link. In this case, a link establishing sequence is such that a master and a slave is switched to each other in the sequence shown in FIG. 4.

Further, in the first embodiment, a description has been given by exemplifying a case in which the car audio device AS is used as a car mounted electronic device; and in the second embodiment, a description has been given by exemplifying a case in which a car navigation device is used in the second embodiment. However, a car telephone device or an automatic running control unit or the like utilizing an ITS (Intelligent Transport System) may be used.

Furthermore, as a radio interface for making a connection between the car mounted electronic device and the mobile communication terminal, there can be used a radio interface employing a scheme used in a radio LAN such as IEEE 802. 11 or another short distance radio data communication scheme called HomeRF.

Otherwise, with respect to the type or configuration of a mobile communication terminal or type of radio interface used for communication with a mobile communication network, various modifications are applicable without departing from the scope of the present invention

### Industrial Applicability

As has been described in detail, according to the present invention, there is provided a mobile communication terminal for use in connection to a car mounted electronic device, comprising information output means having at least one of a speaker or a display, or information input means having at least one of a microphone and a camera, the mobile communication terminal further comprising: first radio interface means for making radio communication with a mobile communication network via a first radio channel; second radio interface for making radio communication with a car mounted electronic device via a second radio channel using electric power smaller than the first radio channel; and first or second information data transfer control means. In the first information data transfer control means, reception information data received from the mobile communication network via the first radio channel is transferred to the car mounted electronic device via the second radio channel so as to be outputted from the information output means of the car mounted electronic device. On the other hand, in the second information data transfer control means, transmission information data inputted by information input means of the car mounted electronic device is received from the car mounted electronic device via the second radio channel so as to transmit the transmission information data to the mobile communication network via the first radio channel.

Therefore, according to the present invention, there can be provided a mobile communication terminal and car mounted electronic device capable of making hands-free mobile communication without requiring a specific car kit, whereby mobile communication in car can be made inexpensively and easily.

## Claims

1. A mobile communication terminal connectable with a car mounted electronic device, said mobile communication terminal comprising:
a first interface means (20, 23) for making radio communication with a base station via a first radio channel;
a second interface means (40, 41) for making radio communication with said electronic device via a second radio channel; and
a connection control section (11a) for controlling connection to the electronic device;
wherein said connection control section (11a) is adapted to initiate a connection procedure with the electronic device if a first packet from the electronic device is detected,
to set communication mode in a hands-free mode automatically if the connection procedure is completed,
to disconnect the connection with the electronic device if a second packet from the electronic device is not detected in the hands-free mode, and
to set communication mode in an own communication mode automatically after the disconnection.

2. The mobile communication terminal according to claim 1, further comprising an information transfer control section (11b) which is adapted to transfer an incoming call to the electronic device via the second interface means (40, 41) if the incoming call is received from the base station via the first interface means (20, 23.

3. The mobile communication terminal according to claim 1, further comprising an information transfer control section (11b) which is adapted to transfer an outgoing call to the base station via the first interface means (20, 23) if the outgoing call is received from the electronic device via the second interface means (40, 41).

4. The mobile communication terminal according to claim 1, wherein said the connection control section (11a) is adapted to transmits an authentication code to the electronic device in the connection procedure via the second interface (40, 41.

5. The mobile communication terminal according to claim 4, wherein the connection control section (11a) is adapted to transmit address information identifying the mobile communication terminal in the connection procedure.

6. The mobile communication terminal according to claim 1, further comprising
a timer which is adapted to be reset in case that the second packet from the electronic device is received, and
the connection control section (11a) is adapted to disconnect the connection with the electronic device if the timer (page 27) exceeds a predetermined value.

7. The mobile communication terminal according to claim 1, wherein the electronic device to which the mobile communication is connectable is a car mounted electronic device.

8. The mobile communication terminal according to claim 1, wherein the mobile communication terminal is a mobile telephone.

9. A method for operating a mobile communication terminal, said mobile communication terminal being connectable with a car mounted electronic device, said method comprising:
making a radio communication with a base station via a first radio channel;
making a radio communication with said electronic device via a second radio channel; and
controlling connection to the electronic device;
said controlling step imcluding:
initiating a connection procedure with the electronic device if a first packet from the electronic device is detected,
setting communication mode in a hands-free mode automatically if the connection procedure is completed,
disconnecting the connection with the electronic device if a second packet from the electronic device is not detected in the hands-free mode, and
setting communication mode in an own communication mode automatically after the disconnection.

10. The method according to claim 9, further comprising transferring an incoming call to the electronic device via the second interface means (40, 41) if the incoming call is received from the base station via the first interface means (20, 23.

11. The method according to claim 9, further comprising transferring an outgoing call to the base station via the first interface means (20, 23) if the outgoing call is received from the electronic device via the second interface means (40, 41).

12. The method according to claim 9, further comprising transmitting an authentication code to the electronic device in the connection procedure via the second interface (40, 41.

13. The method according to claim 12, further comprising transmitting address information identifying the mobile communication terminal in the connection procedure.

14. The method according to claim 9, further comprising
resetting a timer in case that the second packet from the electronic device is received, and
disconnecting the connection with the electronic device if the timer exceeds a predetermined value.

## Patentansprüche

1. Mobiles Kommunikationsterminal, das mit einer elektronischen Vorrichtung, die in einem Fahrzeug angebracht ist verbunden werden kann, wobei das mobile Kommunikationsterminal umfasst:
ein erstes Schnittstellenmittel (20, 23) zur Durchführung einer Funkkommunikation mit einer Basisstation über einen ersten Funkkanal;
ein zweites Schnittstellenmittel (40, 41) zur Durchführung einer Funkkommunikation mit der elektronischen Vorrichtung über einen zweiten Funkkanal;
einen Verbindungssteuerabschnitt (11a) zum Steuern der Verbindung mit der elektronischen Vorrichtung;
wobei der Verbindungssteuerabschnitt (11a) ausgestaltet ist, um eine Verbindungsprozedur mit der elektronischen Vorrichtung zu beginnen, wenn ein erstes Packet von der elektronischen Vorrichtung detektiert wird;
um den Kommunikationsmodus automatischen in einen Freisprechmodus zu setzen, wenn die Verbindungsprozedur beendet ist;
um die Verbindung mit der elektronischen Vorrichtung zu trennen, wenn ein zweites Packet von der elektronischen Vorrichtung in dem Freisprechermodus nicht detektiert wird; und
um den Kommunikationsmodus nach der Trennung automatisch in einen eigenen Kommunikationsmodus einzustellen.

2. Mobiles Kommunikationsterminal nach Anspruch 1, das des Weiteren einen Informationsübertragungssteuerabschnitt (11b) umfasst, der ausgestaltet ist, um einen ankommenden Anruf an die elektronische Vorrichtung über das zweite Schnittstellenmittel (40, 41) zu übertragen, wenn der ankommende Anruf von der Basisstation über das erste Schnittstellenmittel (20, 23) empfangen wird.

3. Mobiles Kommunikationsterminal nach Anspruch 1, das des Weiteren einen Informationsübertragungssteuerabschnitt (11b) umfasst, der ausgestaltet ist, um einen ausgehenden Anruf an die Basisstation über das erste Schnittstellenmittel (20, 23) zu übertrage, wenn der ausgehende Anruf von der elektronischen Vorrichtung über das zweite Schnittstellenmittel (40, 41) empfangen wird.

4. Mobiles Kommunikationsterminal nach Anspruch 1, bei dem der Verbindungssteuerabschnitt (11a) ausgestaltet ist, um einen Authentifizierung-Code zu der elektronischen Vorrichtung in der Verbindungsprozedur über die zweite Schnittstelle (40, 41) zu übertragen.

5. Mobiles Kommunikationsterminal nach Anspruch 4, bei dem der Verbindungssteuerabschnitt (11a) ausgestaltet ist, um Adresseninformation zu übertragen, die das mobile Kommunikationsterminal in der Verbindungsprozedur identifiziert.

6. Mobiles Kommunikationsterminal nach Anspruch 1, das des Weiteren umfasst:
einen Timer, der ausgestaltet ist, um in dem Fall zurückgesetzt zu werden, dass das zweite Packet von der elektronischen Vorrichtung empfangen wird;
wobei der Verbindungssteuerungsabschnitt (11a) ausgestaltet ist, um die Verbindung mit der elektronischen Vorrichtung zu unterbrechen, wenn der Timer (Seite 27) einen vorgegebenen Wert übersteigt.

7. Mobiles Kommunikationsterminal nach Anspruch 1, bei dem die elektronische Vorrichtung, mit der das mobile Kommunikationsterminal verbindbar ist, eine fahrzeugmontierte elektronische Vorrichtung ist.

8. Mobiles Kommunikationsterminal nach Anspruch 1, bei dem das mobile Kommunikationsterminal ein Mobiltelefon ist.

9. Verfahren zum Betreiben eines mobilen Kommunikationsterminals, wobei das mobile Kommunikationsterminal mit einer fahrzeugmontierten elektronischen Vorrichtung verbindbar ist, wobei das Verfahren umfasst:
Herstellen von Kommunikation mit einer Basisstation über einen ersten Funkkanal;
Herstellen einer Funkkommunikation mit der elektronischen Vorrichtung über einen zweiten Funkkanal;
Steuern der Verbindung mit der elektronischen Vorrichtung;
wobei der Steuerschritt umfasst:
Beginnen einer Verbindungsprozedur mit der elektronischen Vorrichtung, wenn ein erstes Packet von der elektronischen Vorrichtung detektiert wird;
Einstellen eines Kommunikationsmodus automatisch in einem Freisprechmodus, wenn die Verbindungsprozedur beendet ist;
Trennen der Verbindung mit der elektronischen Vorrichtung, wenn ein zweites Packet von der elektronischen Vorrichtung in dem Freisprechmodus nicht detektiert wird; und
Einstellen des Kommunikationsmodus in einem eigenen Kommunikationsmodus automatisch nach der Trennung.

10. Verfahren nach Anspruch 9, das des Weiteren umfasst:
Übertragen eines ankommenden Anrufs an die elektronische Vorrichtung über als zweite Schnittstellenmittel (40, 41), wenn der einkommende Anruf von der Basisstation über die erste Schnittstelle (20, 23) empfangen wird.

11. Verfahren nach Anspruch 9, das des Weiteren umfasst:
Übertragen eines ausgehenden Anrufs an die Basisstation über das erste Schnittstellenmittel (20, 23), wenn der ausgehenden Anruf von der elektronischen Vorrichtung über das zweite Schnittstellenmittel (40, 41) empfangen wird.

12. Verfahren nach Anspruch 9, das des Weiteren umfasst:
Übertragen eines Authentifizierungscodes an die elektronische Vorrichtung in der Verbindungsprozedur über die zweite Schnittstelle (40, 41).

13. Verfahren nach Anspruch 12, das des Weiteren umfasst:
Übertragen von Adresseninformation, die das mobile Kommunikationsterminal identifizieren, in der Verbindungsprozedur.

14. Verfahren nach Anspruch 9, das des Weiteren umfasst:
Zurücksetzten eines Timers in dem Fall, in dem das zweite Packet von der elektronischen Vorrichtung empfangen wird;
Trennen der Verbindung zwischen der elektronischen Vorrichtung, wenn der Timer einen vorgegebenen Wert übersteigt.

## Revendications

1. Terminal de communication mobile pouvant être connecté à un dispositif électronique installé dans une voiture, le terminal de communication mobile comprenant :
un premier moyen (20, 23) d'interface pour faire une communication radio avec une station de base par l'intermédiaire d'un premier canal radio ;
un deuxième moyen (40, 41) d'interface pour faire une communication radio avec le dispositif électronique par l'intermédiaire d'un deuxième canal radio ; et
une section (11a) de commande de connexion pour commander la connexion au dispositif électronique ;
dans lequel la section (11a) de commande de la connexion est conçue pour lancer une procédure de connexion avec le dispositif électronique, si un premier paquet provenant du dispositif électronique est détecté ;
pour établir un mode de communication en mode mains libres automatiquement, si la procédure de connexion est achevée,
pour déconnecter la connexion avec le dispositif électronique, si un deuxième paquet provenant du dispositif électronique n'est pas détecté dans le mode à mains libres, et
pour établir un mode de communication dans un propre mode de communication automatiquement après la déconnexion.

2. Terminal de communication mobile suivant la revendication 1, comprenant en outre une section (11b) de commande de transfert d'information, qui est conçue pour transmettre un appel arrivant au dispositif électronique par l'intermédiaire du deuxième moyen (40, 41) d'interface, si l'appel arrivant est reçu à partir de la station de base par l'intermédiaire du premier moyen (20, 23) d'interface.

3. Terminal de communication mobile suivant la revendication 1, comprenant en outre une section (11b) de commande de transfert d'information, qui est conçue pour transférer un appel sortant à la station de base par l'intermédiaire du premier moyen (20, 23) d'interface, si l'appel sortant est reçu à partir du dispositif électronique par l'intermédiaire du deuxième moyen (40, 41) d'interface.

4. Terminal de communication mobile suivant la revendication 1, dans lequel la section (11a) de commande de connexion est conçue pour transmettre un code d'authentification au dispositif électronique dans la procédure de connexion par l'intermédiaire de la deuxième interface (40, 41).

5. Terminal de communication mobile suivant la revendication 4, dans lequel la section (11a) de commande de connexion est conçue pour transmettre une information d'adresse identifiant le terminal de communication mobile dans la procédure de connexion.

6. Terminal de communication mobile suivant la revendication 1, comprenant en outre
une horloge qui est conçue pour être remise à l'état initial dans le cas où le deuxième paquet provenant du dispositif électronique est reçu, et
la section (11a) de commande de connexion est conçue pour déconnecter la connexion avec le dispositif électronique, si l'horloge (page 27) dépasse une valeur déterminée à l'avance.

7. Terminal de communication mobile suivant la revendication 1, dans lequel le dispositif électronique auquel le terminal de communication mobile peut être connecté est un dispositif électronique installé dans une voiture.

8. Terminal de communication mobile suivant la revendication 1, dans lequel le terminal de communication mobile est un téléphone mobile.

9. Procédé pour faire fonctionner un terminal de communication mobile, le terminal de communication mobile pouvant être connecté à un dispositif électronique installé dans une voiture, procédé dans lequel
on fait une communication radio avec la station de base par l'intermédiaire d'un premier canal radio ;
on fait une communication radio avec le dispositif électronique par l'intermédiaire d'un deuxième canal radio ;
on commande une connexion au dispositif électronique ;
le stade de commande comprenant :
le lancement d'une procédure de connexion avec le dispositif électronique, si un premier paquet provenant du dispositif électronique est détecté,
l'établissement d'un mode de communication dans un mode à mains libres automatiquement, si la procédure de connexion est achevée,
la déconnexion de la connexion avec le dispositif électronique, si un deuxième paquet provenant du dispositif électronique n'est pas détecté dans le mode à mains libres, et
l'établissement d'un mode de communication dans un mode de communication propre automatiquement après la déconnexion.

10. Procédé suivant la revendication 9, comprenant en outre le transfert d'un appel arrivant au dispositif électronique par l'intermédiaire du deuxième moyen (40, 41) d'interface, si l'appel arrivant est reçu à partir de la station de base par l'intermédiaire du premier moyen (20, 21) d'interface.

11. Procédé suivant la revendication 9, comprenant en outre le transfert d'un appel sortant à la station de base par l'intermédiaire du premier moyen (20, 21) d'interface, si l'appel sortant est reçu du dispositif électronique par l'intermédiaire du deuxième moyen (40, 41) d'interface.

12. Procédé suivant la revendication 9, comprenant en outre la transmission d'un code d'authentification au dispositif électronique dans la procédure de connexion par l'intermédiaire du deuxième interface (40, 41).

13. Procédé suivant la revendication 12, comprenant en outre la transmission d'une information d'adresse identifiant le terminal de communication mobile dans la procédure de connexion.

14. Procédé suivant la revendication 9, comprenant en outre la remise à l'état initial d'une horloge dans le cas où le deuxième paquet provenant du dispositif électronique est reçu, et
la déconnexion de la connexion avec le dispositif électronique, si l'horloge dépasse une valeur déterminée à l'avance.
